# EUROPEAN PATENT SPECIFICATION

(11) **EP 2 896 231 B1**
(45) Date of publication and mention of the grant of the patent: **28.06.2017**
(21) Application number: 12761957.5
(22) Date of filing: 14.09.2012
(51) Int. Cl.: H04W 8/12, G06F 17/30

(54) **DATA REDUNDANCY IN A DATA LAYERED ARCHITECTURE NETWORK**
DATENREDUNDANZ IN EINEM NETZWERK MIT DATENSCHICHTARCHITEKTUR
REDONDANCE DE DONNÉES DANS UN RÉSEAU DE DONNÉES DOTÉ D'UNE ARCHITECTURE À PLUSIEURS COUCHES

(43) Date of publication of application: 22.07.2015
(73) Proprietor: Telefonaktiebolaget LM Ericsson (publ), 164 83 Stockholm (SE)
(72) Inventor: LEMARK, Jan, S-112 43 Stockholm (SE); ÅSTRÖM, Bo, S-117 59 Stockholm (SE)
(74) Representative: Ericsson
(86) International application number: PCT/EP2012/068163
(87) International publication number: WO 2014/040647

(56) References cited:
- EP-A1- 2 472 405
- EP-A2- 2 386 921
- WO-A1-2010/115461
- WO-A1-2011/073711
- US-A1- 2002 143 764
- US-A1- 2005 132 126
- US-A1- 2010 082 540

## Description

### Technical Field

The present invention relates to providing data redundancy in a Data Layered Architecture network.

### Background

Current Public Land Mobile Networks (PLMN) typically comprise a radio access network and a core network. The radio access network is responsible for providing wireless access to network users, whilst the core network is responsible, *inter alia,* for subscriber service access control and subscriber roaming. In the case of 2G or GSM network, a typical PLMN comprises circuit switched (CS) core network for handling voice calls and a packet switched (PS) core network for handling data. A 3G or UMTS network similarly comprises PS and CS core networks, whilst a 4G or LTE network comprises only an Enhanced Packet Core (EPC) core network. In addition, service networks may co-exist with the PS and CS core networks. One such service network is the IP Multimedia Subsystem (IMS) network. The IMS network may also be considered as a core network. In practical implementations, subscribers may roam between different radio access networks, and services may be switched between core networks, e.g. a voice call may be switched from a 3G radio access network and CS core network to a 4G network, with the same IMS core network remaining in control of the session.

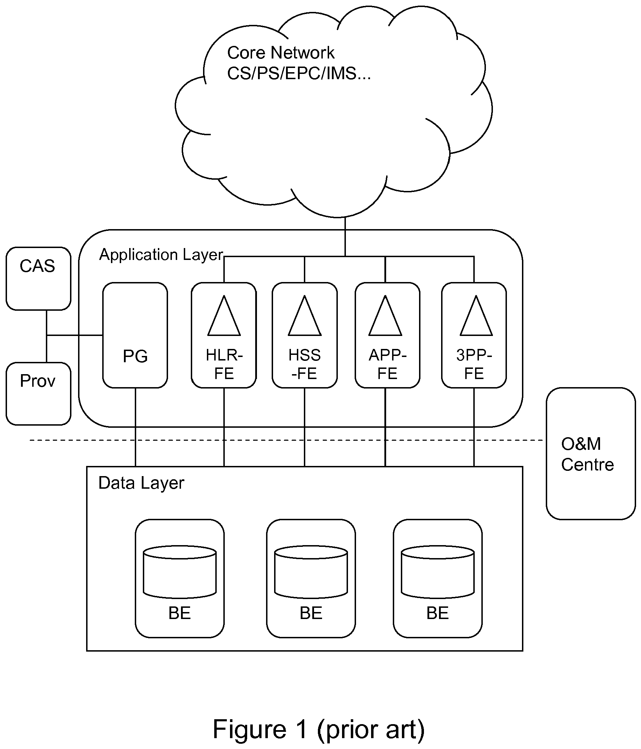

PLMN operators are always keen to reduce network signalling load for a given subscriber volume, to increase network resilience to failure, and to reduce the complexity and number of specialist network nodes. With this in mind, the 3GPP organisation has defined a so-called Data Layered Architecture (DLA) that splits the traditional node and network architecture introduced for GSM, UMTS and EPC in two halves; an application front end (Application-FE) that provides the logic for a node, and a Data back end (Data-BE) that provides data. This is illustrated in Figure 1, in which the functionality of a node is split into an application layer and a data layer. The Data-BE provides a highly available and geo-redundant solution to the Application-FEs that simplifies the design of applications. DLA also simplifies the routing in the core networks since any node can, if it is built as a stateless FE, serve any subscriber. The principles and advantages of DLA can be summarised as follows:
- Simplified routing to Application FEs in Core Networks
   - Any Application FE can serve any subscriber
- Data & Repository Consolidation
   - Several applications use the same backend (repository consolidation)
   - Data de-duplication by allowing several applications to access the same data object (data consolidation)
- Scalable and Highly Available system
   - Backend provides HA and Geo Redundancy
- Simple scaling of Application Front Ends
- Simplified Application Design
   - Provisioning into back end database
   - Dynamic allocation of subscribers to Application FEs
   - Allows for stateless Application FE design
   - Data Availability provided by the Backend

Consider the Home Location Register (HLR) that is implemented in 2G and 3G core networks and that acts as a central database for subscriber information. The HLR stores details of subscribers issued by the network operator. Typically, a network will comprise a number of HLRs, each of which is assigned to a group of network subscribers. An HLR provides subscriber information to other core network nodes, such as the 2G Mobile Switching Centre (MSC). In the traditional architecture, core network applications, such as the MSC, must identify and route signalling to the correct HLR (i.e. the HLR currently serving a given subscriber). According to the DLA architecture, an HLR-FE can serve any subscriber (i.e. all network subscribers) and network routing becomes very simple: the advanced Data-BE performs routing for the applications.

Other advantages of DLA include Data and Repository Consolidation allowing databases and data-object sharing, and simplified provisioning (and removal) of subscribers within the system.

A failure of the Data-BE would leave to a failure of HLR-FE services for all affected subscribers to (note that the same is true for FE applications that provide other services, HLR is provided by way of example only). In view of this, the Data-BE is provided with a number of availability and redundancy mechanisms. Examples of these include Synchronous and Asynchronous replications. In order to support the services in a real-time fashion, the Data-BE data must be accessible within a few milliseconds, even for large data sets. Thus the availability and redundancy mechanisms for the Data-BE implementation must be in-memory based.

Data-BE data may therefore be replicated at different Data-BE nodes in order to provide a replication mechanism in the event of failure of the "master" Data-BE node holding a particular subscriber's data. As subscriber data includes data that can change rapidly (examples of which include subscriber location, whether call-forwarding is turned on, sessions in which the subscriber is a participant), replication of subscriber data must be performed frequently.

A problem with known in-memory databases, where tight coupling between the different instances (master and slaves of the database is required, is that the signalling and data storage capacity increases where a higher level of redundancy is required, which drives the memory footprint required.

WO 2010/115461 and WO 2011/073711 both disclose the Data Layered Architecture Network.

US 2010/082540 discloses a method of backing up databases.

### Summary

An object is to provide efficient ways of providing increased redundancy of Data-BE systems for a DLA network without greatly increasing the signalling bandwidth and footprint required. It is a further object to provide more efficient ways of providing redundancy of data.

According to a first aspect, there is provided a method of providing data redundancy in a Data Layered Architecture Network. The method comprises, at an enhanced redundancy data backend node, receiving data from a data backend node, designating data as either static or dynamic, wherein dynamic data comprises one or more of subscriber location, subscriber sessions and call forwarding setting and static data comprises one or more of subscriber names, contact details and global preferences. Data designated as dynamic data is stored in a computer readable medium in the form of a volatile memory and data designated as static data is stored in a computer readable medium in the form of a non- volatile memory.

In this way, data has a lower memory footprint, as only dynamic data need be regularly updated. However, the enhanced redundancy Data-BE node is able to reproduce all data (both static and dynamic) if required.

According to a second aspect, there is provided an enhanced redundancy data back end node for use in Data Layered Architecture Network, the enhanced redundancy data back end node comprising a receiver for receiving dynamic replication data from a data back end node, a first computer readable medium in the form of a volatile memory for storing data designated as dynamic data a second computer readable medium in the form of a non-volatile memory for storing data designated as static data and a transmitter for sending stored data to an application front end node. The enhanced redundancy backend node further comprises a processor arranged to designate the data into either static data or dynamic data prior to storing the data, wherein dynamic data comprises one or more of subscriber location, subscriber sessions and call forwarding setting and static data comprises one or more of subscriber names, contact details and global preferences.

According to a third aspect, there is provided a computer program comprising computer readable code which, when run on an enhanced redundancy Data-BE node for use in a DLA network, causes the enhanced redundancy Data-BE node to behave as described above in the first aspect.

### Brief Description of the Drawings

Figure 1 illustrates schematically in a block diagram a known exemplary Data Layered Architecture network;
Figure 2 illustrates schematically in a block diagram an exemplary Data Layered Architecture network;
Figure 3 is a flow diagram illustrating steps of an embodiment; and
Figure 4 illustrates schematically in a block diagram an exemplary enhanced redundancy BE node; and
Figure 5 illustrates schematically in a block diagram an exemplary Data-BE node.

### Detailed Description

DLA has been outlined above with reference to Figure 1. An approach will now be described that provides enhanced redundancy for data stored in a Data-BE by providing a further enhanced redundancy Data-BE node that can support several Data-BE nodes. The term enhanced redundancy Data-BE is referred to any node or combination of nodes that can provide enhanced redundancy of data as described below.

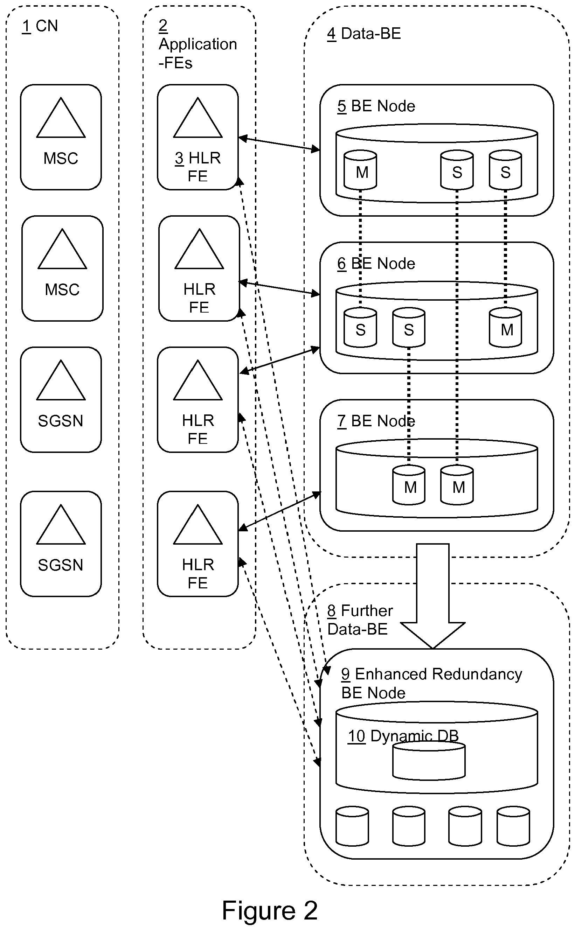

Referring to Figure 2, there is illustrated a Core Network 1, an Application-FE layer 2 that includes, in this example, HLR-FEs 3 and a Data-BE 4 that includes three BE nodes 5, 6, 7. It can be seen that each BE node 5, 6, 7 stores one or more master (M) copy of data and may store one or more slaves (S). For example, BE node 5 stores a master copy of data that is replicated by BE node 6. BE node 6 stores a master copy of data that is replicated by BE node 5. BE node 7 stores two master copies of data, one of which is replicated by BE node 5, the other of which is replicated by BE node 7.

In the example where the data stored by the BE nodes is subscriber data, regular replications are made between the BE nodes using normal replication procedures.

However, under some circumstances a drastic failure of the BE nodes could lead to all subscriber data from all BE nodes 5, 6, 7 being unavailable, in which case the HLR-FEs 3 will not be able to provide HLR services to the subscribers. To address this, a further Data-BE system 8 that provides enhanced redundancy is proposed. It is proposed to operate the further Data-BE system in addition to the regular Data-BE 4, but it will be appreciated that the further Data-BE system could be operated instead of existing replication procedures.

It is proposed to categorise subscriber data as either static data or dynamic data. Static data includes data that does not change, or only changes rarely. Examples of static subscriber data include contact details, subscriber name, global preferences and so on. Examples of dynamic data include subscriber location, whether call forwarding is set, which sessions a subscriber is involved in and so on.

If, for example, the master data from BE node 5 is replicated at BE node 6, the replicated data is also sent to the enhanced redundancy BE node 9 at the further Data-BE 8. Enhanced redundancy BE node 9 only receives the dynamic data from the Data-BE node 5. Static data is provisioned either via a separate function or as part of a normal provisional process for a Data-BE. Static data is stored on a slower computer readable medium (typically a non-volatile medium such as a hard disk drive) than dynamic data. In an alternative embodiment, static data may also be sent periodically to the enhanced redundancy Data-BE node 9, although it is preferred that static data is already provisioned at the enhanced redundancy Data-BE node 9.

Dynamic data, on the other hand, is stored in a memory that allows much faster access (such as a volatile solid state memory) in a dynamic data database. The use of such a memory allows data replication with low latency, high transaction per second and with the normal redundancy requirements. This means that, for a given set of memory at the enhanced redundancy BE node 9, more dynamic data can be managed

The further Data-BE system 8 that only replicates the dynamic data can replicate from many database instances in the Data-BE system 4 and place the data in one database instance 10 in the extra BE system. This mitigates the strong coupling between replicas in a current in-memory database.

Since only the dynamic data is kept in the dynamic memory in the extra BE system while static data is stored on disk in the extra BE system, this leads to a reduced need of footprint for the added increased redundancy level.

In case of a disaster situation the enhanced redundancy BE node 9 at the further Data-BE system 8 will build the complete in-memory database for the chosen data set, using the static data from disk and the dynamic data from memory, and act as a normal in-memory database given the client low latency and high transaction per second characteristics. Note that under normal use, the further Data-BE system 8 will only be used for replication and will not be required to provide the data. This would typically be required in the event of a failure of all BE nodes 5, 6, 7 in the regular Data-BE system 4, but may also be used in the event of a failure of some of the BE nodes 5, 6, 7 in the regular Data-BE system 4.

Note the data to be replicated is categorised as dynamic or static, and the static data is provisioned at the enhanced redundancy Data-BE. This means that only the dynamic data need be sent during replication from a regular Data-BE node 5 to an enhanced redundancy BE-node 9. However, it is possible that the regular Data-BE node 5 sends all of the subscriber data to the enhanced redundancy Data-BE node 9, and the enhanced Data-BE node determines which data is static or dynamic before saving the dynamic data in the dynamic data database 10.

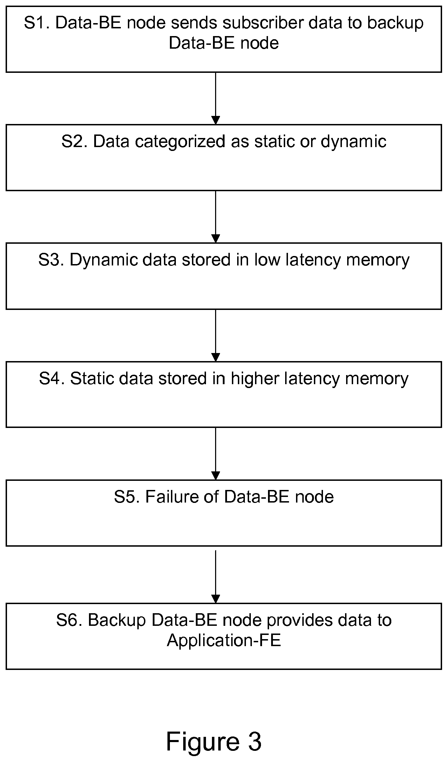

Figure 3 is a flow diagram illustrating steps of an exemplary embodiment. The following numbering corresponds to that of Figure 3.
S1. A Data-BE node 5 sends (typically dynamic) subscriber data to the enhanced redundancy Data-BE node 9 in addition to performing normal replication procedures with other Data-BE nodes 6, 7.
S2. The data is categorized as static or dynamic. Typically the Data-BE node 5 is configured to only send dynamic subscriber data, but note that the categorization may be performed by the enhanced redundancy Data-BE node 9 after receiving the data. If the categorization is performed by the Data-BE node 5, then it need only send dynamic subscriber data to the enhanced redundancy Data-BE node 9 for each replication. Static subscriber data need only be sent to the enhanced redundancy Data-BE node 9 periodically if at all, as it is typically already provisioned.
S3. The data categorized as dynamic data is stored in a low latency memory such as a solid state memory.
S4. The data categorized as static data is stored in a higher latency memory such as a hard disk or other type of non-volatile memory.
S5. The enhanced redundancy Data-BE 9 is not required unless there is a failure of one or more Data-BE nodes that hold the relevant subscriber data.
S6. In the event of a failure of one or more Data-BE nodes that hold the relevant subscriber data, the static data and dynamic data relevant to the subscriber is provided to an Application-FE node such as an HLR-FE 3 in the Application-FE layer 2. In this way, the failure of one or more Data-BE nodes 5, 6, 7 does not cause the HLR-FE 3 to lose the relevant subscriber data, and the fact that only the dynamic data is stored in a low latency memory assists in reducing the footprint of the enhanced redundancy Data-BE node 9.

Note that there are several ways in which subscriber data can be categorized as static or dynamic. For example, static data may be considered to be data that will not change during a session in which a subscriber participates. A series of rules may be applied to subscriber data to determine whether the data is static or dynamic.

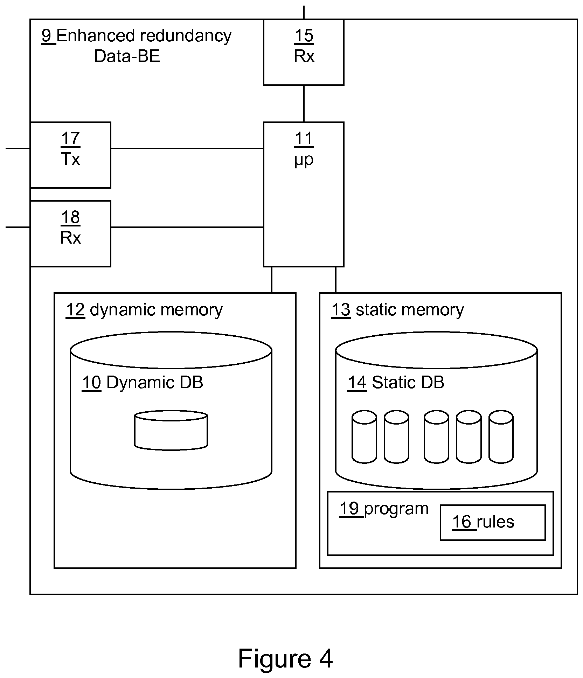

Figure 4 illustrates schematically in a block diagram an enhanced redundancy Data-BE node 9 for use in a further Data-BE system 8. The enhanced redundancy Data-BE node 9 is provided with a processor 11 for message handling and determining where to store data. A computer readable medium in the form of a first memory 12 is provided for storing the dynamic data database 10, in which dynamic data is stored. The first memory has a low latency and is typically a volatile memory. A computer readable medium in the form of a second memory 13 having a higher latency is also provided for storing a static database 14 in which static subscriber data is stored. The second memory 14 is typically a non-volatile memory such as a hard disk, where latency is much higher than volatile memory.

The enhanced redundancy Data-BE node 9 is also provided with a receiver 15 for receiving subscriber data from a regular Data-BE node 5. In the event that the regular Data-BE node 5 is configured to only send dynamic data, the processor 11 simply stores the dynamic data in the appropriate memory 12. In the event that the regular Data-Be node 5 sends all subscriber data, the processor 11 applies rules 16 that may be stored at the enhanced redundancy Data-BE node 9 to categorize the subscriber data into static or dynamic data before storing the data in the appropriate memory 12, 13. Rules may, for example, include a table mapping different types of data to whether or not the data is categorized as static or dynamic. A transmitter 17 may also be provided for sending messages towards the regular Data-BE node. Note that the receiver 15 in one embodiment may comprise two physical receivers; one for receiving dynamic data and one for receiving static data. Of course, where the static data is preconfigured at the enhanced redundancy Data-BE node 9, the receiver may only receive dynamic data, or may receive occasional updates to static data,

The enhanced redundancy Data-BE node 9 is also provided with a transmitter 17 and receiver 18 for communicating with an HLR-FE 3 in the event that the HLR-FE 3 can no longer receive subscriber data from the regular Data-BE system 4. This allows the enhanced redundancy Data-BE node 9 to provide subscriber data directly to the HLR-FE when required, thereby allowing the HLR-FE 3 to be able to continue to service subscriber requests in the event of a failure of the regular Data-BE system.

The enhanced redundancy Data-BE node 9 may also be provided with a computer program 19 stored in a memory (shown in the static memory 13 in Figure 4, but it will be appreciated that it may be stored in the dynamic memory 12, a further memory, or remotely). When executed by the processor 11, the program 11 causes the enhanced redundancy Data-BE node 9 to behave as described above.

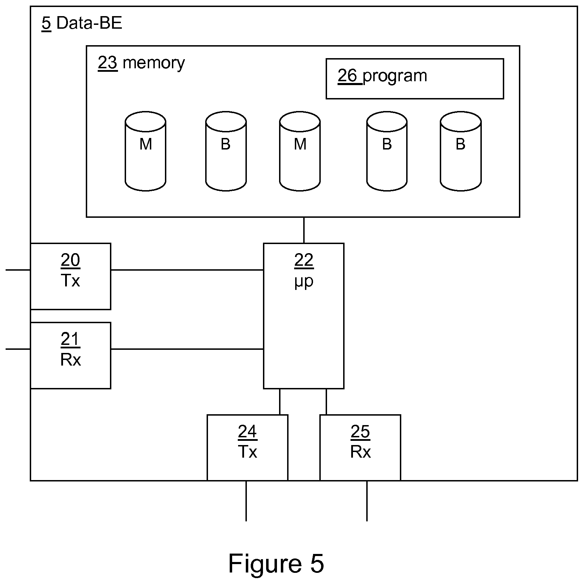

Note that the above Figure 4 illustrates only a first memory 12 and a second memory 13, but it will be appreciated that each memory may be physically embodied as a plurality of memories. Also note that while a transmitters 17 and two receivers 15, 18 are shown in Figure 5, they may be physically embodied in a plurality of transmitters or receivers, only one transmitter and receiver, or one or more transceivers. The structure of Figure 4 is by way of example only.

Turning now to Figure 5, there is illustrated an exemplary Data-BE node 5. The Data-BE node 5 is provided with a transmitter 20 and receiver 21 for communicating with an Application-FE node 3 that requires data such as subscriber data. A processor 22 is also provided for maintaining the subscriber data and handling messages. A computer readable medium in the form of a memory 23 is provided for storing one or more databases of subscriber data. A second transmitter 24 and a second receiver 25 are provided for communicating with other Data-BE nodes to perform regular replications of subscriber data, and also for communicating with the enhanced redundancy Data-BE node 9 to perform a replication as described above.

The processor 22, in one embodiment, is arranged to categorize the subscriber data as either dynamic or static and only send the dynamic data to the enhanced redundancy Data-BE node 9. Alternatively, the processor may send all of the subscriber data directly to the enhanced redundancy Data-BE node 9.

In a further embodiment, where the enhanced redundancy Data-BE 9 is pre-provisioned with static data, the processor 22 may be further arranged to determine when static data at the Data-BE 5 has changed and, in addition to notifying the Data-BE 5 of dynamic data, also notify the enhanced redundancy Data-BE 9 of changes to static data. In this way, the enhanced redundancy Data-BE 9 can maintain up to date static data, and signalling is minimized, as only changes to static data are communicated.

The memory 23 may also be used to store a computer program 26 which, when executed by the processor 22, causes the Data-BE node 5 to behave as described above.

Note that the above description refers to only one memory, but it will be appreciated that the memory may be physically embodied as a plurality of memories. Also note that while two transmitters 20, 24 and two receivers 21, 25 are shown in Figure 5, they may be physically embodied in a plurality of transmitters or receivers, only one transmitter and receiver, or one or more transceivers. The structure of Figure 5 is by way of example only.

The replication techniques described above allow a Data-BE in a DLA to have increased redundancy but at minimal cost to memory and processing required.

It will be appreciated by the person of skill in the art that various modifications may be made to the above described embodiment without departing from the scope of the present invention. For example, the functions of the various nodes are described as being embodied at a single node, but it will be appreciated that different functions may be provided at different network nodes.

The following abbreviations have been used in this application:
- BE: Back end
- CN: Core Network
- CS: circuit switched
- DLA: Data Layered Architecture
- EPC: Evolved Packet Core
- FE: Front end
- GRPS: General Packet Radio Service
- HLR: Home Location Register
- IMS: IP Multimedia Subsystem
- LTE: Long Term Evolution
- MSC: Mobile Switching Centre
- O&M: Operations & Maintenance centre
- PLMN: Public Land Mobile Network
- PS: packet switched
- SGSN: Serving GPRS Support Node
- SIM: Subscriber Identity Module
- VLR: Visitor Location Register

## Claims

1. A method of providing data redundancy in a Data Layered Architecture Network, the method comprising (9):
at an enhanced redundancy data backend node:
receiving (S1) data from a data backend node (5);
**characterized in that** the method further comprises:
designating data as either static or dynamic, wherein dynamic data comprises one or more of subscriber location, subscriber sessions and call forwarding setting and static data comprises one or more of subscriber names, contact details and global preferences;
storing (S3) data designated as dynamic data in a computer readable medium in the form of a volatile memory; and
storing (S4) data designated as static data in a computer readable medium in the form of a non- volatile memory.

2. An enhanced redundancy data back end node (9) for use in Data Layered Architecture Network, the enhanced redundancy data back end node comprising:
a receiver (15) for receiving dynamic replication data from a data back end node (5);
a first computer readable medium in the form of a volatile memory (12) for storing data designated as dynamic data; a second computer readable medium in the form of a non-volatile memory (13) for storing data designated as static data; and
a transmitter (17) for sending stored data to an application front end node (3);
**characterized in that** the enhanced redundancy backend node further comprises a processor arranged to designate the data into either static data or dynamic data prior to storing the data, wherein dynamic data comprises one or more of subscriber location, subscriber sessions and call forwarding setting and static data comprises one or more of subscriber names, contact details and global preferences.

3. A computer program (19), comprising computer readable code which, when run on an enhanced redundancy data back end node (9) for use in a Data Layered Architecture Network, causes the enhanced redundancy data back end node (9) to perform the method of claim 1.

## Patentansprüche

1. Verfahren zum Bereitstellen von Datenredundanz in einem Netzwerk mit Datenschichtarchitektur, das Verfahren umfassend (9):
an einem verbesserten Redundanzdaten-Backendknoten:
Empfangen (S1) von Daten von einem Daten-Backendknoten (5);
**dadurch gekennzeichnet, dass** das Verfahren weiter umfasst:
Bezeichnen von Daten als entweder statisch oder dynamisch, wobei dynamische Daten ein oder mehrere Teilnehmerstellen, Teilnehmersitzungen und Anrufweiterleitungseinstellungen umfassen und wobei statische Daten ein oder mehrere Teilnehmernamen, Kontaktdetails und globale Präferenzen umfassen;
Speichern (S3) von Daten, die als dynamische Daten bezeichnet sind, in einem computerlesbaren Medium in Form eines flüchtigen Speichers; und
Speichern (S4) von Daten, die als statische Daten bezeichnet sind, in einem computerlesbaren Medium in Form eines nichtflüchtigen Speichers.

2. Verbesserter Redundanzdaten-Backendknoten (9) zur Verwendung in einem Netzwerk mit Datenschichtarchitektur, wobei der verbesserte Redundanzdaten-Backendknoten umfasst:
einen Empfänger (15) zum Empfangen von dynamischen Replikationsdaten von einem Daten-Backendknoten (5);
ein erstes computerlesbares Medium in der Form eines flüchtigen Speichers (12) zum Speichern von Daten, die als dynamische Daten bezeichnet sind;
ein zweites computerlesbares Medium in der Form eines nichtflüchtigen Speichers (13) zum Speichern von Daten, die als statische Daten bezeichnet sind; und
einen Sender (17) zum Senden gespeicherter Daten zu einem Anwendungs-Frontend-Knoten (3);
**dadurch gekennzeichnet, dass**
der verbesserte Redundanzdaten-Backendknoten weiter einen Prozessor umfasst, der angeordnet ist, zum Bezeichnen der Daten als entweder statische Daten oder dynamische Daten vor dem Speichern der Daten,
wobei dynamische Daten ein oder mehrere Teilnehmerstellen, Teilnehmersitzungen und Anrufweiterleitungseinstellungen umfassen und wobei statische Daten ein oder mehrere Teilnehmernamen, Kontaktdetails und globale Präferenzen umfassen.

3. Computerprogramm (19), umfassend computerlesbaren Code, der, wenn er auf einem verbesserten Redundanzdaten-Backendknoten (9) zur Verwendung in einem Netzwerk mit Datenschichtarchitektur ausgeführt wird, bewirkt, dass der verbesserte Redundanzdaten-Backendknoten (9) das Verfahren nach Anspruch 1 durchführt.

## Revendications

1. Procédé de fourniture de redondance de données dans un réseau doté d'une architecture organisée en couches de données, le procédé comprenant (9) :
dans un noeud dorsal de données de redondance renforcée :
la réception (S1) de données d'un noeud dorsal de données (5) ;
**caractérisé en ce que** le procédé comprend en outre :
la désignation de données comme étant statiques ou dynamique, dans lequel les données dynamiques comprennent un ou plus d'emplacements d'abonnés, de sessions d'abonnés et de réglages de transfert d'appels et les données statiques comprennent un ou plus de noms d'abonnés, de détails de contacts et de préférences globales ;
le stockage (S3) de données désignées comme données dynamiques dans un support lisible sur ordinateur sous la forme d'une mémoire volatile ; et
le stockage (S4) de données désignées comme données statiques dans un support lisible sur ordinateur sous la forme d'une mémoire non volatile.

2. Noeud dorsal de données de redondance renforcée (9) pour utilisation dans un réseau doté d'une architecture organisée en couches de données, le noeud dorsal de données de redondance renforcée comprenant :
un récepteur (15) pour recevoir des données de réplication dynamiques d'un noeud dorsal de données (5) ;
un premier support lisible sur ordinateur sous la forme d'une mémoire volatile (12) pour stocker des données désignées comme données dynamiques ; et
un second support lisible sur ordinateur sous la forme d'une mémoire non volatile (13) pour stocker des données désignées comme données statiques ; et
un émetteur-récepteur (17) pour envoyer des données stockées à un noeud frontal d'application (3) ;
**caractérisé en ce que** le noeud dorsal de données de redondance renforcée comprend en outre un processeur agencé pour désigner les données en données statiques ou en données dynamiques avant de stocker les données, dans lequel les données dynamiques comprennent un ou plus d'emplacements d'abonnés, de sessions d'abonnés et de réglages de transfert d'appels et les données statiques comprennent un ou plus de noms d'abonnés, de détails de contacts et de préférences globales.

3. Programme d'ordinateur (19), comprenant un code lisible sur ordinateur qui, lorsqu'il tourne sur un noeud dorsal de données de redondance renforcée (9) pour utilisation dans un réseau doté d'une architecture organisée en couches de données, amène le noeud dorsal de données de redondance renforcée (9) à effectuer le procédé selon la revendication 1.
